# EUROPEAN PATENT APPLICATION

(11) **EP 2 506 345 A1**
(43) Date of publication of application: **03.10.2012**
(21) Application number: 12160835.0
(22) Date of filing: 22.03.2012
(51) Int. Cl.: H01M 4/04, H01M 4/38, H01M 10/44, H01M 4/134, H01M 10/0525

(54) **Method of manufacturing lithium ion storage device**

(30) Priority: 31.03.2011 JP 2011078591
(71) Applicant: Fuji Jukogyo Kabushiki Kaisha, Tokyo 160-8316 (JP)
(72) Inventor: Utsunomiya, Takashi, Tokyo, 160-8316 (JP)
(74) Representative: Sajda, Wolf E.

(57) **Abstract**

Provided is a method of manufacturing a lithium ion storage device. A lithium ion storage device (10) has a positive electrode (18), an alloy-based negative electrode (12) and a lithium ion supply source for pre-doping lithium ions to the negative electrode (12). The method includes: a pre-doping step of pre-doping the negative electrode at a low charge rate; and a first charge step of, after the pre-doping step, performing a first charge at a charge rate that is higher than the one during the pre-doping.

## Description

### BACKGROUND OF THE INVENTION

### 1. Field of the Invention

The present invention relates to a method of manufacturing a lithium ion storage device that uses an alloy-based negative electrode.

### 2. Description of the Related Art

In recent years, lithium ion storage devices have come to be used in the form of lithium ion rechargeable batteries or the like in various fields, for instance vehicles (EV) and portable devices related to information and communications. One kind of such lithium ion storage devices uses an alloy-based negative electrode that includes a metal material, such as silicon or the like, as a negative electrode active material.

In such a lithium ion storage device, the silicon or the like forms an alloy with lithium metal, through charging and discharging, whereby the lithium ion storage device expands and contracts. As is known, such expansion and contraction result in deterioration of the negative electrode, and in an impaired cycle characteristic.

To address this problem, for instance Japanese Unexamined Patent Application Publication JP-A 2008-243 717 discloses a technology in which a first charge of a assembled storage device is performed at a low charge rate of 0.005 C to 0.03 C, to homogenize lithium ions in the negative electrode.

Although the storage device disclosed in JP-A 2008-243 717 does not exhibit significant impairment of cycle characteristic, it requires nonetheless a first charge at a low charge rate, and hence it takes a very long time to complete charging. Such a prolonged first charge time entails increased manufacturing costs, if the first charge is performed in production facilities, or decreases user convenience, if the first charge is performed by a user.

### SUMMARY OF THE INVENTION

Therefore, it is an object of the present invention to allow completing a first charge in a short time, while maintaining a high cycle characteristic, in a storage device that uses a metal material, such as silicon, as a negative electrode active material.

In order to attain the above object, an aspect of the present invention provides a method of manufacturing a lithium ion storage device that has a positive electrode, an alloy-based negative electrode and a lithium ion supply source for pre-doping lithium ions to the negative electrode. The method includes a pre-doping step of pre-doping the negative electrode at a low charge rate; and a first charge step of, after the pre-doping step, performing a first charge at a charge rate that is higher than the one during the pre-doping.

In the present invention, the term "pre-doping" denotes charging performed from a lithium ion supply source before a first charge. The term "low charge rate" during pre-doping means a charge rate that is lower than a charge rate during the first charge. The term "high charge rate" during the first charge means a charge rate that is higher than a charge rate during pre-doping.

The inventors of the present application found that relatively lowering the charge rate only during pre-doping of the negative electrode, as performed in the manufacturing process of the storage device, allowed maintaining the cycle characteristic, without deterioration, even if the first charge was performed thereafter at a high charge rate.

Preferably, the charge rate during pre-doping in the abovementioned pre-doping step ranges from 0.01 C to 0.1 C, in particular, from 0.02 C to 0.1 C, and more preferably from 0.02 C to 0.05 C. Performing pre-doping at such a low charge rate has the effect of making uniform the distribution of lithium in the negative electrode, reducing the possibility of lithium deposition on account of charging and discharging, and improving the cycle characteristic.

A pre-doping time may become longer if the pre-doping charge rate is smaller than 0.01C. If the pre-doping charge rate is larger than 0.1C, the uniformity of the lithium distribution in the negative electrode may be lost, and the cycle characteristic may be impaired.

Preferably, the pre-doping step is performed in an environment at a temperature not higher than 40°C. Generation of gas from the electrolyte solution and formation of an SEI film (solid electrolyte interface film) during pre-doping can be averted thereby, and hence pre-doping is performed uniformly in the negative electrode.

Preferably, the charge rate in the first charge is 1 C or higher. Performing pre-doping at such a high charge rate allows shortening the first charge time. In the present invention, the lithium distribution has already been made uniform during the pre-doping step. Therefore, cycle characteristics are not impaired even in the case of comparatively fast charging.

Preferably, a use region of the negative electrode active material ranges from 5 % to 80 % of full capacity. The use region of the negative electrode active material denotes an SOC (State of Charge) region between an end of charging and an end of discharging for extraction of energy from a cell into which a positive electrode and a negative electrode are assembled. A first charge capacity corresponds to this region.

The full capacity of the negative electrode active material denotes a maximum capacity at which charging and discharging are possible, and corresponds to a SOC region from 0 % to 100 %. The cycle characteristic of the negative electrode is stabilized by setting the use region of the negative electrode active material to a range from 5 % to 80 % of the full capacity.

The lithium ion supply source is included in the positive electrode. Alternatively, a lithium electrode different from the positive electrode and the negative electrode is used as the lithium ion supply source. If the lithium ion supply source is included in the positive electrode, the charge rate can be controlled through control of current flowing from the positive electrode to the negative electrode.

If the lithium ion supply source is included in a lithium electrode that is different from the positive electrode and the negative electrode, the charge rate can be controlled through control of current flowing from the lithium electrode to the negative electrode.

The present invention allows the cycle characteristic to be enhanced by lowering the charge rate during pre-doping, and allows a first charge completion time to be shortened by increasing the charge rate during the first charge.

### BRIEF DESCRIPTION OF THE DRAWING

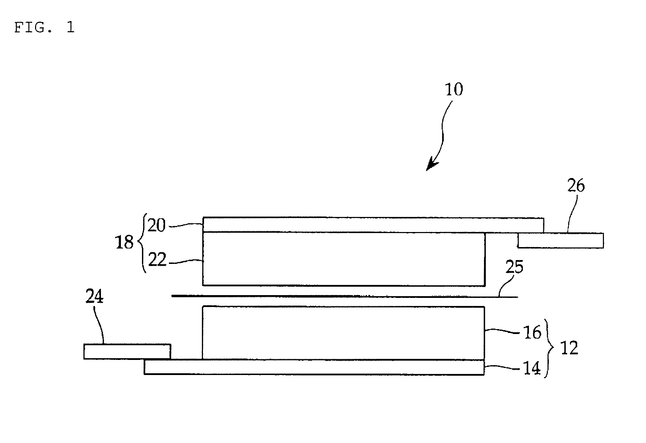

- Fig. 1: is a cross-sectional diagram illustrating schematically an interior of a lithium ion storage device according to an embodiment of the present invention.

### DESCRIPTION OF THE PREFERRED EMBODIMENT

An embodiment of the present invention will be explained below. Fig. 1 is a diagram illustrating schematically an interior of a lithium ion storage device 10 according to the present embodiment. The lithium ion storage device 10 according to the present embodiment includes a positive electrode 18 having a positive electrode active material into which lithium ions can be doped and from which lithium ions can be de-doped; a negative electrode 12 having a negative electrode active material into which lithium ions can be doped and from which lithium ions can be de-doped; and a nonaqueous electrolyte solution (not shown) filled between the positive electrode 18 and the negative electrode 12. Charging and discharging are performed through migration of lithium ions between the positive electrode 18 and the negative electrode 12, and current can be extracted during discharging.

The positive electrode 18 and the negative electrode 12 are stacked with a film-like separator 25 therebetween. The separator 25 is impregnated with a nonaqueous electrolyte solution. In the case where the positive electrode 18 and negative electrode 12 are provided as a plurality thereof, the positive electrode 18 and the negative electrode 12 are alternately stacked with each other.

A stacked-type electrode unit resulting from stacking the foregoing elements on a flat plate, or a wound-type electrode unit resulting from winding a stack of the foregoing elements, can also be used in the present embodiment.

As used herein, the term "doping" includes conceptually storage, intercalation, adsorption, support and so forth, and the term "de-doping" includes conceptually reverse processes of the foregoing. The lithium ion storage device may be for instance, a lithium ion rechargeable battery, a lithium ion capacitor or the like.

In the present embodiment, the negative electrode 12 is formed with a collector 14 that includes a metal substrate such as Cu foil, and is provided with a lead 24 for a connection to an external circuit; and a negative electrode active material layer 16 that is provided on one or both faces of the collector 14. The negative electrode active material layer 16 is formed by coating onto the collector 14 and drying a slurry of a negative electrode active material, a binder and a conduction aid in a solvent such as NMP.

The negative electrode active material is a substance into which lithium ions can be doped and from which lithium ions can be de-doped. As such there can be used a metal material, as well as a carbon material, or metal material or alloy material or oxide that can store lithium ions, or a mixture of the foregoing.

The particle size of the negative electrode active material ranges preferably from 0.1 µm to 30 µm. Examples of the metal material include silicon and tin. Examples of the alloy material include a silicon alloy and a tin alloy. Examples of the oxide include a silicon oxide, a tin oxide and a titanium oxide.

Examples of the carbon material include graphite, graphitizable carbon, non-graphitizable carbon, and a polyacene-based organic semiconductor. The foregoing materials may be used in the form of a mixture. The present embodiment is particularly effective in storage devices that have an alloy-based negative electrode including silicon, tin and the like.

In the present embodiment, the positive electrode 18 is formed with a collector 20 that includes a metal substrate such as A1 foil, and is provided with a lead 26 for connection to an external circuit; and a positive electrode active material layer 22 provided on one or both faces of the collector 20. The positive electrode active material layer 22 is formed by coating onto the collector 20 and drying a slurry of a positive electrode active material, a binder and a conduction aid in a solvent such as NMP.

The positive electrode active material is a lithium-containing compound into which lithium ions can be doped and from which lithium ions can be de-doped. As such there may be used an oxide, a phosphate, a nitride, an organic material, a sulfide (including organic sulfur or inorganic sulfur), a metal complex, a conductive polymer, a metal or the like.

In particular, there is preferably used a positive electrode active material having a large lithium releasing amount, for instance a transition metal oxide or phosphate such as LiCoO₂, LiNiO₂, LiMn₂O₄ and LiFePO₄; an organic compound such as an alkoxide material, a phenoxide material, a polypyrrole material, an anthracene material, a polyaniline material, a thioether material, a thiophene material, a thiol material, a sulfurane material, a persulfarane material, a thiolate material, a dithioazole material, a disulfide material, and a polythiophene material ; a sulfide; a conductive polymer; or inorganic sulfur having been imparted with lithium beforehand. The particle size of the positive electrode active material ranges preferably from 0.1 µm to 30 µm.

A nonaqueous electrolyte solution is used as the electrolyte solution in the present embodiment since electrolysis does not occur even under high voltage and lithium ions can be stably present. An electrolyte solution is formed by dissolving an ordinary lithium salt serving as an electrolyte into a solvent. The electrolyte and the solvent are not particularly limited to these.

For instance, as the electrolyte there may be used LiClO₄, LiAsF₆, LiBF₄, LiPF₆, LiB(C₆H₅)₄, CH₃SO₃Li, CF₃SO₃Li, (C₂F₅SO₂)₂NLi or (CF₃SO₂)₂NLi, or a mixture of the foregoing. These electrolytes may be used singly or any of these may be used in combination. In the present embodiment there are especially preferably used LiPF₆ and LiBF₄.

As the solvent of the nonaqueous electrolyte solution there can be used a linear carbonate such as dimethyl carbonate (DMC), diethyl carbonate (DEC) and methyl ethyl carbonate (MEC); a cyclic carbonate such as ethylene carbonate (EC), propylene carbonate (PC), butylene carbonate (BC) and vinylene carbonate (VC); or a solvent having a comparatively low molecular weight such as acetonitrile (AN), 1,2-dimethoxyethane (DME), tetrahydrofuran (THF), 1,3-dioxolane (DOXL), dimethyl sulfoxide (DMSO), sulfolane (SL), and propionitrile (PN), as well as mixtures of the foregoing.

Preferably, the solvent of the electrolyte solution in the present embodiment is a mixture of a linear carbonate and a cyclic carbonate. A multi-mixture of two or more types of linear carbonate and two or more types of cyclic carbonate may also be used. Fluoroethylene carbonate (FEC) or the like may also be added to the solvent, as necessary.

In the present embodiment, the term first charge denotes an initial charge with an SOC region as used in charging and discharging of the storage device. In the present embodiment, charging is performed within a range of SOC 5 % to SOC 80 of the negative electrode.

In the present embodiment, the term pre-doping denotes doping of lithium ions beforehand. An object pursued herein is to compensate an irreversible capacity fraction of the negative electrode, by doping from the exterior of the negative electrode, but doping may be performed by a reversible capacity fraction as well. The exterior of the negative electrode denotes herein a below-described lithium ion supply source. Pre-doping corresponds to charging performed from the lithium ion supply source before the first charge.

In the present embodiment, preferably, pre-doping is performed in such a manner that the SOC of the negative electrode reached 5 % or higher.

In the present embodiment, the lithium ion supply source may be provided in the positive electrode active material layer 22 of the positive electrode 18, which includes, in addition to the positive electrode active material, a lithium-containing compound capable of pre-doping lithium ions into the negative electrode 12, such as an oxide, phosphate, nitride, organic material, sulfide or the like.

Upon pre-doping of the negative electrode 12, lithium ions can be doped into the negative electrode (charging) by connecting an external circuit between the positive electrode 18 and the negative electrode 12, and causing current to flow from the positive electrode 18 to the negative electrode 12. The charge rate can be controlled by control current using the external circuit.

As the lithium ion supply source, for instance, a lithium electrode (not shown), in which lithium metal is provided on a collector that is formed with a metal substrate such as Cu foil. Upon pre-doping of the negative electrode 12, an external circuit is connected between the lithium electrode and the negative electrode 12, and current is caused to flow from the lithium electrode to the negative electrode 12.

Lithium ions are doped as a result into the negative electrode 12 (charging). The charge rate can be controlled by control current using the external circuit. If pre-doping is thus performed using lithium metal, there is preferably provided a through-hole in the positive electrode collector 20 and the negative electrode collector 14. Providing a through-hole allows lithium ions to be pre-doped smoothly from the lithium electrode to the negative electrode 12.

The pre-doping step in the present embodiment is performed at a low charge rate. Herein, a low charge rate denotes a charge rate that is lower than the charge rate during the first charge. Preferably, the low charge rate ranges for instance from 0.01 C to 0.1 C.

Performing pre-doping at a low charge rate results in a uniform lithium distribution within the negative electrode 12, in a lower possibility of lithium deposition on account of charging or discharging, and in a better cycle characteristic. Pre-doping takes a long time when a charge rate is below 0.01 C. When a charge rate is larger than 0.1 C, the uniformity of the lithium distribution in the negative electrode 12 may be reduced, and the cycle characteristic may be impaired.

Preferably, the pre-doping step is performed in an environment at a temperature not higher than 40 °C. Generation of gas from the electrolyte solution and formation of an SEI film (solid electrolyte interface film) during pre-doping can be averted in a low-temperature environment at a temperature not higher than 40 °C.

Pre-doping can be performed uniformly as a result. The first charge step in the present embodiment is performed at a high charge rate. A high charge rate denotes herein a charge rate that is higher than the charge rate during pre-doping. Preferably, the high charge rate is for instance 1 C or higher.

The first charge time can be shortened by performing the first charge at a high charge rate. The lithium distribution has already been made uniform during the pre-doping step. Therefore, the cycle characteristic is not impaired even in the case of comparatively fast charging. An advantageous effect in terms of productivity is achieved through completion of the first charge in a short time.

Also, a charging process in a short time enables uniform impregnation of the electrode with electrolyte solution, so that deposition of lithium metal in the negative electrode 12 is less likely to occur. Formation of bubbles in the electrode on account of gas generation is thus suppressed through charging over a short time. Impregnation of the electrolyte solution is achieved uniformly as a result.

Uniform impregnation of the electrolyte solution has the effect of eliminating resistance variability in the electrode, and suppressing partial deposition of metallic lithium. The first charge cannot be completed in a short time if performed at less than 1 C. In this case it is difficult to achieve an advantageous effect in terms of productivity.

In the present embodiment, preferably, the use region of the negative electrode active material ranges from 5 % to 80 % of full capacity. The use region of the negative electrode active material denotes a SOC region between an end of charging and an end of discharging end for extraction of energy from a cell into which a positive electrode and a negative electrode have been assembled.

The first charge capacity corresponds to this region. The full capacity of the negative electrode active material denotes a maximum capacity at which charging and discharging are possible, and corresponds to a SOC region from 0 % to 100 %.

The use region of the negative electrode active material can be controlled based on pre-doping capacity and on the reversible capacity of the positive electrode 18. That is, there can be defined a lower limit of the use region of the negative electrode active material, based on pre-doping capacity.

In addition, there can be defined an upper limit of the use region of the negative electrode active material based on the reversible capacity of the positive electrode 18. The cycle characteristic of the negative electrode 12 is stabilized if the use region of the negative electrode active material ranges from 5 % to 80 % of the full capacity. The cycle characteristic is impaired if the use region is smaller than 5 %, or larger than 80 %, of the full capacity.

In the present embodiment, as described above, the first charge can be completed within a short time, while enhancing the cycle characteristic, by performing pre-doping at a low charge rate, and, thereafter, performing a first charge at a high charge rate.

### EXAMPLES

Specific examples of the present invention will be explained below. However, the present invention is not limited to the present examples.

### Example 1

### (1) Fabrication of a positive electrode

Herein, 90 parts by weight of LiCoO₂ as a positive electrode active material, 5 parts by weight of PVdF as a binder, and 5 parts by weight of carbon black as a conduction aid, were weighed to prepare a positive electrode slurry with 100 parts by weight of N-methyl-2-pyrrolidone (NMP). The positive electrode slurry was coated by a doctor blade method onto an A1 foil collector (coated portion of 26 mm × 40 mm, thickness of 10 µm, with a protruding tab portion for lead connection), and was dried, followed by pressing, to form thereby a 100 µm-thick positive electrode active material layer. The coating density of the positive electrode active material layer was 20 mg/cm².

### (2) Fabrication of a negative electrode

Herein, 70 parts by weight of a negative electrode active material in the form of a pulverized product of silicon (silicon powder manufactured by Aldrich) to a particle size of 5 µm or smaller, plus 15 parts by weight of polyimide as a binder and 5 parts by weight of carbon black as a conduction aid, were weighed to prepare a negative electrode slurry with 130 parts by weight of NMP.

The negative electrode slurry was coated by a doctor blade method onto a Cu foil collector (coated portion of 24 mm × 38 mm, thickness of 10 µm, with a protruding tab portion for lead connection), and was dried, followed by pressing, to form thereby a 30 µm-thick negative electrode active material layer. The coating density of the negative electrode active material layer was 10 mg/cm².

### (3) Fabrication of a cell

The negative electrode and the positive electrode were stacked with a polyethylene separator (thickness 25 µm) interposed in between, in such a manner that the respective active material layers faced each other. An aluminum lead was welded to the tab portion of the positive electrode collector, and a nickel lead was welded to the tab portion of the negative electrode collector.

A stack including the positive electrode and the negative electrode was sealed and bonded, in such a manner that the respective leads were exposed to the exterior, while leaving an electrolyte solution inlet, using an exterior material of aluminum laminate. An electrolyte solution of 1.2 M LiPF₆, as a lithium salt, dissolved in a mixed solvent of EC/DMC/FEC at 70:25:5, was injected through the electrolyte solution inlet, and the exterior material of aluminum laminate was completely sealed thereafter.

### (4) Pre-doping step

The leads of the positive and negative electrodes of the cell produced as described above were connected to corresponding terminals of a charging and discharging tester (manufactured by Aska Electronic), and pre-doping was performed up to SOC 10 % at a charge rate of 0.02 C from the positive electrode to the negative electrode. That is, lithium ions were doped to the negative electrode up to a pre-doping (PD) capacity of 10 %. It took 5 hours to reach SOC 10 %. This operation was performed in an environment at a room temperature of 25°C.

### (5) First charge step

Next, fast charging corresponding to SOC 60 % was performed at a charge rate of 1 C. Specifically, lithium ions corresponding to SOC 60 % were doped, from the positive electrode to the negative electrode, up to 70 % of the full capacity of the negative electrode. That is, the use capacity (ΔSOC) of the negative electrode was 60 %. It took 0.6 hours for reach from SOC 10 % to SOC 70 %. That is, it took 5.6 hours to reach from SOC 0 % to SOC 70 %. The first charge could thus be completed in a comparatively short time.

### (6) Cycle test

Next, charging and discharging between the positive and negative electrodes were repeated over 50 cycles, in such a manner that the SOC of the negative electrode reached from 10 to 70 %, i.e. so that the charging and discharging capacity reached 60 % of the full capacity of the negative electrode. The capacity retention rate was 100 %, which was indicative of a very good cycle characteristic.

### Example 2

An experiment identical to that of Example 1 was performed, except that the pre-doping step herein involved pre-doping up to SOC 5 % at a charge rate of 0.05 C.

It took 1 hour to reach SOC 5 % in the pre-doping step. It took 0.6 hours to reach from SOC 5 % to SOC 65 % in the first charge step. Accordingly, it took 1.6 hours to reach from SOC 0 % to SOC 65 %. The first charge could thus be completed in a very short time. The capacity retention rate was 97 %, which was indicative of a very good cycle characteristic.

### Example 3

An experiment identical to that of Example 1 was performed, except that herein the pre-doping step was performed at a charge rate of 0.05 C.

It took 2 hours to reach SOC 10 % in the pre-doping step. It took 0.6 hours to reach from SOC 10 % to SOC 70 % in the first charge step was. Accordingly, it took 2.6 hours to reach from SOC 0 % to SOC 70 %. The first charge could thus be completed in a very short time. The capacity retention rate was 97 %, which was indicative of a very good cycle characteristic.

### Example 4

An experiment identical to that of Example 1 was performed, except that the pre-doping step herein involved pre-doping up to SOC 20 % at a charge rate of 0.05 C.

It took 4 hours to reach SOC 20 % in the pre-doping step. It took 0.6 hours to reach from SOC 20 % to SOC 80 % in the first charge step. Accordingly, it took 4.6 hours to reach from SOC 0 % to SOC 80 %. The first charge could thus be completed in a very short time. The capacity retention rate was 100 %, which was indicative of a very good cycle characteristic.

### Example 5

An experiment identical to that of Example 1 was performed, except that herein the pre-doping step was performed at a charge rate of 0.1 C.

It took 1 hour to reach SOC 10 % in the pre-doping step. It took 0.6 hours to reach from SOC 10 % to SOC 70 % in the first charge step. Accordingly, it took 1.6 hours to reach from SOC 0 % to SOC 70 % was. The first charge could thus be completed in a very short time. The capacity retention rate was 92 %, which was indicative of a good cycle characteristic.

### Example 6

An experiment identical to that of Example 1 was performed, except that herein the charge rate in the pre-doping step was 0.05 C and the charge rate in the first charge step was 2 C.

It took 2 hours to reach SOC 10 % in the pre-doping step. It took 0.3 hours to reach from SOC 10 % to SOC 70 % in the first charge step. Accordingly, it took 2.3 hours to reach from SOC 0 % to SOC 70 %. The first charge could thus be completed in a very short time. The capacity retention rate was 95 %, which was indicative of a good cycle characteristic.

### Comparative Example 1

An experiment identical to that of Example 1 was performed, except that herein the charge rate in the pre-doping step was 0.01 C and the charge rate in the first charge step was 0.01 C.

It took 10 hours to reach SOC 10 % in the pre-doping step. It took 60 hours to reach from SOC 10 % to SOC 70 % in the first charge step. Accordingly, it took 70 hours to reach from SOC 0 % to SOC 70 %. The capacity retention rate was 100 %, indicative of a very good cycle characteristic. However, it took such a very long time to complete the first charge.

### Comparative Example 2

An experiment identical to that of Example 1 was performed, except that herein the charge rate in the pre-doping step was 0.05 C and the charge rate in the first charge step was 0.05 C.

It took 2 hours to reach SOC 10 % in the pre-doping step. It took 12 hours to reach from SOC 10 % to SOC 70 % in the first charge step. Accordingly, it took 14 hours to reach from SOC 0 % to SOC 70 %. The capacity retention rate was 100 %, indicative of a very good cycle characteristic. However, it took such a long time to complete the first charge.

### Comparative Example 3

An experiment identical to that of Example 1 was performed, except that herein the charge rate in the pre-doping step was 0.1 C and the charge rate in the first charge step was 0.1 C.

It took 1 hour to reach SOC 10 % in the pre-doping step. It took 6 hours to reach from SOC 10 % to SOC 70 % in the first charge step. Accordingly, it took 7 hours to reach from SOC 0 % to SOC 70 % was. The capacity retention rate was 88 %, which does not amount to a significant cycle deterioration. However, it took such a long time to complete the first charge.

### Comparative Example 4

An experiment identical to that of Example 1 was performed, except that herein the charge rate in the pre-doping step was 0.5 C and the charge rate in the first charge step was 0.5 C.

It took 0.2 hours to reach SOC 10 % in the pre-doping step. It took 1.2 hours to reach from SOC 10 % to SOC 70 % in the first charge step. Accordingly, it took 1.4 hours to reach from SOC 0 % to SOC 70 %. The first charge could thus be completed in a very short time, but the capacity retention rate was 74 %, which amounts to significant cycle deterioration.

### Comparative Example 5

An experiment identical to that of Example 1 was performed, except that herein the pre-doping step was performed at a charge rate of 1 C.

It took 0.1 hours to reach SOC 10 % in the pre-doping step. It took 0.6 hours to reach from SOC 10 % to SOC 70 % in the first charge step. Accordingly, it took 0.7 hours to reach from SOC 0 % to SOC 70 %. The first charge could thus be completed in a very short time. The capacity retention rate was 48 %, and cycle deterioration was significant.

### Comparative Example 6

An experiment identical to that of Example 1 was performed, except that herein the charge rate in the pre-doping step was 2 C and the charge rate in the first charge step was 2 C. It took 0.05 hours to reach SOC 10 % in the pre-doping step was 0.05. It took 0.3 hours to reach from SOC 10 % to SOC 70 % in the first charge step. Accordingly, it took 0.35 hours to reach from SOC 0 % to SOC 70 % was. The first charge could thus be completed in a very short time. The capacity retention rate was 45 %, and cycle deterioration was significant.

### Comparative Example 7

An experiment identical to that of Example 1 was performed, except that herein the pre-doping step was omitted.

It took 0.6 hours to reach from SOC 0 % to SOC 60 % in the first charge step. The first charge could thus be completed in a very short time. The capacity retention rate was 21 %, i.e. cycle deterioration was significant. It is inferred that cycle deterioration in the negative electrode arose as a result of performing the charging and discharging cycle at a region from SOC 0 % to SOC 5 %.

### Comparative Example 8

An experiment identical to that of Example 1 was performed, except that herein pre-doping was performed up to SOC 30 % in such a manner that the charge rate was set to 0.05 C in the pre-doping step and the first charge step.

It took 6 hours to reach SOC 30 % in the pre-doping step was. It took 0.6 hours to reach from SOC 30 % to SOC 90 % in the first charge step. Accordingly, it took 6.6 hours to reach from SOC 0 % to SOC 90 % was 6.6 hours.

The time required for completing the first charge was not long, but the capacity retention rate was 29 %, i.e. cycle deterioration was significant. It is inferred that cycle deterioration in the negative electrode arose as a result of performing the charging and discharging cycle at a region exceeding SOC 80 %.

Table 1 illustrates experiment results for Examples 1 to 6, and Table 2 illustrates experiment results for Comparative Examples 1 to 8.

**Table 1**

| | Examples | | | | | |
|---|---|---|---|---|---|---|
| | 1 | 2 | 3 | 4 | 5 | 6 |
| Pre-doping (rate) | 0.02 C | 0.05 C | 0.05 C | 0.05 C | 0.1 C | 0.05 C |
| First charge (rate) | 1 C | 1 C | 1 C | 1 C | 1 C | 2C |
| Pre-doping capacity | 10 % | 5% | 10 % | 20 % | 10 % | 10 % |
| Charge-discharge capacity | 60 % | 60 % | 60 % | 60 % | 60 % | 60 % |
| Pre-doping time (h) | 5 | 1 | 2 | 4 | 1 | 2 |
| First charge time (h) | 0.6 | 0.6 | 0.6 | 0.6 | 0.6 | 0.3 |
| Pre-doping + first charge time (h) | 5.6 | 1.6 | 2.6 | 4.6 | 1.6 | 2.3 |
| Capacity retention rate (after 50 cycles) | 100 % | 97 % | 100 % | 100 % | 92 % | 95 % |

**Table 2**

| | Comparative Example | | | | | | | |
|---|---|---|---|---|---|---|---|---|
| | 1 | 2 | 3 | 4 | 5 | 6 | 7 | 8 |
| Pre-doping (rate) | 0.01 C | 0.05 C | 0.1 C | 0.5 C | 1 C | 2C | - | 0.05 C |
| First charge (rate) | 0.01 C | 0.05 C | 0.1 C | 0.5 C | 1 C | 2C | 1 C | 1 C |
| Pre-doping capacity | 10 % | 10 % | 10 % | 10 % | 10 % | 10 % | 0% | 30 % |
| Charge-discharge capacity | 60 % | 60 % | 60 % | 60 % | 60 % | 60 % | 60 % | 60 % |
| Pre-doping time (h) | 10 | 2 | 1 | 0.2 | 0.1 | 0.05 | 0 | 6 |
| First charge time (h) | 60 | 12 | 6 | 1.2 | 0.6 | 0.3 | 0.6 | 0.6 |
| Pre-doping + first charge time (h) | 70 | 14 | 7 | 1.4 | 0.7 | 0.35 | 0.6 | 6.6 |
| Capacity retention rate (after 50 cycles) | 100 % | 100 % | 88 % | 74 % | 48 % | 45 % | 21 % | 29 % |

As the above experiments show, the cycle characteristic is enhanced in Examples 1 to 6 by lowering the charge rate during pre-doping. Also, the first charge completion time is shorted in Examples 1 to 6 compared to the Comparative Examples 1 to 8, by setting the charge rate during the first charge to be comparatively higher than the charge rate during pre-doping.

The present invention is not limited to the abovementioned embodiment, and various modifications can be made without departing from the scope of the invention. For instance, the material of the positive electrode, the material of the negative electrode, the material of the separator as well as the type of the electrolyte solution are not limited to those in the examples set forth above, and may be appropriately modified while satisfying the features set forth in the present invention.

Also, the charge rate during pre-doping and the charge rate during the first charge are not limited to the numerical values set forth in the embodiments and examples, so long as the first charge is performed at a charge rate that is higher than during pre-doping.

### List of Reference Signs

- 10 =: lithium ion storage device
- 12 =: negative electrode
- 14 =: collector
- 16 =: negative electrode active material layer
- 18 =: positive electrode
- 20 =: collector
- 22 =: positive electrode active material layer
- 24 =: lead
- 25 =: separator
- 26 =: lead

## Claims

1. A method of manufacturing a lithium ion storage device (10) that is provided with a positive electrode (18), an alloy-based negative electrode (12) and a lithium ion supply source (22) for pre-doping lithium ions to the negative electrode (12),
the method comprising:
- a pre-doping step of pre-doping the negative electrode (12) at a low charge rate; and
- a first charge step of, after the pre-doping step, performing a first charge at a charge rate that is higher than the one during the pre-doping.

2. The method of manufacturing a lithium ion storage device (10) according to claim 1,
wherein in the pre-doping step, the pre-doping is performed at a charge rate ranging from 0.01 C to 0.1 C.

3. The method of manufacturing a lithium ion storage device (10) according to claim 1 or 2,
wherein in the pre-doping step, the pre-doping is performed in an environment at 40°C or below.

4. The method of manufacturing a lithium ion storage device (10) according to any one of claims 1 to 3,
wherein the first charge is performed at a charge rate of 1 C or higher.

5. The method of manufacturing a lithium ion storage device (10) according to any one of claims 1 to 4,
wherein a use region of the negative electrode active material (16) is 5 % to 80 % of full capacity.

6. The method of manufacturing a lithium ion storage device according to any one of claims 1 to 5,
wherein the lithium ion supply source (22) is included in the positive electrode (18).

7. The method of manufacturing a lithium ion storage device according to any one of claims 1 to 5,
wherein the lithium ion supply source is a lithium electrode formed of an electrode that is different from the positive electrode (18) and the negative electrode (12).
